# EUROPEAN PATENT SPECIFICATION

(11) **EP 3 133 937 B1**
(45) Date of publication and mention of the grant of the patent: **06.03.2019**
(21) Application number: 15782786.6
(22) Date of filing: 22.04.2015
(51) Int. Cl.: A23L 7/117

(54) **READY-TO-EAT, GLUTEN-FREE AND KETOGENIC COCONUT MEAT-BASED CEREAL**
ESSFERTIGE, GLUTENFREIE ZEREALIE AUF BASIS VON KETOGENEM KOKOSFLEISCH
CÉRÉALE CÉTOGÈNE SANS GLUTEN À BASE DE CHAIR DE NOIX DE COCO, PRÊTE À CONSOMMER

(30) Priority: 22.04.2014 PH 12014000123
(43) Date of publication of application: 01.03.2017
(73) Proprietor: Kimes, Priscila F., Cebu, 6012 (PH)
(72) Inventor: Kimes, Priscila F., Cebu, 6012 (PH)
(74) Representative: HGF Limited
(86) International application number: PCT/PH2015/000005
(87) International publication number: WO 2015/163773

(56) References cited:
- WO-A1-01/60181
- WO-A1-94/00026
- WO-A2-2015/163773
- US-A- 3 876 811
- US-A- 4 996 063
- US-A1- 2014 093 620
- TRINIDAD T P ET AL: "Dietary fiber from coconut flour: A functional food", INNOVATIVE FOOD SCIENCE AND EMERGING TECHNOLOGIES, ELSEVIER, AMSTERDAM, NL, vol. 7, no. 4, 1 December 2006 (2006-12-01), pages 309-317, XP028057089, ISSN: 1466-8564, DOI: 10.1016/J.IFSET.2004.04.003 [retrieved on 2006-12-01]
- 'Frosted 'Corn' Flakes Cereal' SATISFYING EATS STUFFED, [Online] 14 May 2013, XP055366601 Retrieved from the Internet: <URL:http://satisfyingeats.com/breakfast/fr osted-corn-flakes-cereal> [retrieved on 2016-12-28]
- 'Paleo Coconut Flakes Review' JULIAN BAKERY 11 June 2014, XP055368002 Retrieved from the Internet: <URL:http://www.julianbakery.com/paleo-coco nut-flakes-review> [retrieved on 2016-12-28]
- 'A Crunchy Fresh Keto Cereal Recipe' WICKED STUFFED 08 March 2013, pages 1 - 15, XP055367009 Retrieved from the Internet: <URL:http://www.wickedstuffed.com/keto-reci pes/a-crunchy-fresh-keto-cereal- recipe> [retrieved on 2016-12-28]

## Description

### Field of Invention

This invention relates to a ready-to-eat, gluten-free, and ketogenic cereal product comprising of natural ingredients, such as coconut meat, which are distinguished in that these are substantially free from additives and from severe processing conditions and characteristically has high medium chain triglycerides (MCTs) and fiber contents, and low glycemic index. The present invention further comprises a process for preparing such a ready-to-eat, gluten-free, and ketogenic cereal, with no salt, no sugar, no chemical preservatives, and no artificial flavors and colors added.

### DESCRIPTION

### Background of the Invention

A variety of ready-to-eat cereals have been developed and sold in the market in recent years. However, these cereals all have different types of additives which are used as preservatives, or used to provide for prevention of staling and or oxidation. Likewise, many of these cereals have been prepared by subjecting it to processing which significantly alters the product. Only a few cereals in the market have been developed which are substantially free of these additives and preservatives.

It is well-known today that people are conscious of their health and wellness. Cereal products which are ready-to-eat are desirable when these are developed and prepared from natural ingredients and an subjected to minimal processing. In addition, these ready-to-eat cereal products would be even more desirable if they contained naturally beneficial ingredients, which have good nutrition levels.

In the present invention, only natural ingredients are used in the preparation of the ready-to-eat cereal, such that it is gluten-free, ketogenic, with high medium chain triglyceride (MCT) and fiber contents.

### Background Art of the Invention

As there are a number of cereals developed, prepared and sold in the market, the art relating to this invention is well-described. A natural, ready-to-eat cereal similar to the preferred type prepared in the present invention is known. United States Patent 3,876,811, issued April 8, 1976 to Bonner et al., teaches a ready-to-eat cereal of natural ingredients, said cereal comprising a base and a coating thereon, said base comprising cereal flakes, coconut, milk solids, and edible nuts and said coating comprising brown sugar, non-hydrogenated vegetable oil, and a sugar solution. The cereal has a density in the range of from about 0.25 to about 0.60 gram per cubic centimeter and moisture content in the range of from about 1.0 to about 3.5 percent by weight. However, this cereal also contains oil, which is added to keep the cereal weight product tender and extend the cereal's bowl life in milk.

A process for preparing water-soluble dietary fiber compositions from oats is also known to those skilled in the art U.S. Patent 4,996,063, issued February 26, 1991 to Inglett, teaches preparing water-soluble dietary fiber compositions by treating an aqueous dispersion of a gelatinized, milled, oat substrate with an alpha-amylase under conditions which will hydrolyze the substrate and yield a soluble fraction and an insoluble fraction, separating said soluble fraction from said insoluble fraction, and recovering from said soluble fraction said water-soluble dietary fiber substantially free of water-insoluble fiber. However, neither of these references teach or suggest that the water-soluble dietary fiber prepared in accordance with the process of the referred 4,996,063 patent would be useful to partially or totally replace the oil in the cereal product described in the US 3,876,811 patent, nor that such replacement would provide a product having the desired lower fat content, yet still provide a cereal having a texture and bowl life similar to that of the cereal of the US 3,876,811 patent.

On the other hand, a **ketogenic** diet is high-fat, adequate-protein, low-carbohydrate diet that in medicine is used primarily to treat difficult-to-control (refractory) epilepsy in children. The diet forces the body to burn fats rather than carbohydrates. Normally, the carbohydrates contained in food are converted into glucose, which is then transported around the body and is particularly important in fuelling brain function. However, if there is very little carbohydrate in the diet, the liver converts fat into fatty acids and ketone bodies. The ketone bodies pass into the brain and replace glucose as an energy source. An elevated level of ketone bodies in the blood, a state known as ketosis, leads to a reduction in the frequency of epileptic seizures.

The original therapeutic diet for pediatric epilepsy provides just enough protein for body growth and repair, and sufficient calories to maintain the correct weight for age and height. This classic ketogenic diet contains a 4:1 ratio by weight of fat to combined protein and carbohydrate. This is achieved by excluding high-carbohydrate foods such as starchy fruits and vegetables, bread, pasta, grains and sugar, while increasing the consumption of foods high in fat such as nuts, cream and butter.

Most dietary fat is made of molecules called long-chain triglycerides (LCTs). However, medium-chain triglycerides (MCTs)- made from fatty acids with shorter carbon chains than LCTs- are more ketogenic. A variant of the classic diet known as the MCT ketogenic diet uses a form of coconut oil, which is rich in MCTs, to provide around half the calories. As less overall fat is needed in this variant of the diet, a greater proportion of carbohydrate and protein can be consumed, allowing a greater variety of food choices.

It is therefore an object of the present invention to provide a ready-to-eat, gluten-free and ketogenic cereal having texture and bowl life properties similar to those of the oil-containing cereal described in the previous patents cited above, but made of natural base ingredients use as coconut meat, which are known to be naturally rich in medium chain triglycerides (MCTs) and coconut water.

It is another object of the present invention to provide a process for preparing the ready-to-eat, gluten-free and ketogenic cereal with coconut meat and coconut water as base components.

The cereal flakes of this invention are similar to the commonly found cereal flakes which preferably have not been substantially altered by chemical adulteration. The flaking of cereal is well known to the cereal industry and it is intended that this invention include cereal flakes made from well-known processes, but which preferably do not include cereal the addition of unnatural or chemical additives. Of particular importance in this invention are cereal flakes selected from the group comprising coconut meat. It has been found to be of particular desirability to utilize such base ingredient in cereal flakes in this invention.

### The Invention

The basic concept of the invention is to utilize coconut meat, known to be composed of medium chain triglycerides (MCTs), for the preparation of a ready-to-eat cereal and improving the processes and nutritional and health benefits of the coconut cereal as a good alternative to various cereals already available in the market. The product has a naturally sweet coconut flavor, light brown in color, and crunchy in texture, can also be eaten directly as a snacks, can be used as toppings and a breakfast cereal substitute added with milk and other fruits and nuts in a mixture. The product is produced from all natural ingredients, grown coconuts, with no salt and no sugar added, and no chemical preservatives. Thus it is gluten-free, with low glycemic index, high dietary fiber, and high medium chain triglycerides (MCTs) content. The cereal product is naturally preserved through dehydration and is stable for at least ten (10) months.

The objects of this invention are accomplished by a ready-to-eat, gluten-free and ketogenic cereal of natural ingredients, said cereal comprising of: coconut meat as the base component, said base component comprising from about 48 parts to about 50 parts by weight of the cereal batter, a natural binding component, said binding component comprising of sago starch from about 2 parts to about 3 parts by weight of the cereal batter, a natural food flavoring, said food flavoring comprising from about 0 part to about 1 part by weight of the cereal batter, and sufficient coconut water, comprising from about 48 parts to about 50 parts by weight, to render the cereal batter composition liquid. The present invention further comprises a process for preparing such a ready-to-eat, gluten-free, and ketogenic cereal, which is characteristically with low carbohydrate and high fiber contents and low glycemic index.

In a preferred embodiment of this invention, the objects of the invention are accomplished by a ready-to-eat cereal of natural ingredients, said cereal comprising of natural flavoring ingredients, comprising from about 0 to 1 part by weight of the coconut cereal batter, said natural flavorings can be dehydrated fruit bits such as mango bits, pineapple bits, raisins, chocolate powder, cinnamon, moringa, turmeric, lemon grass, and other preferable and desirable natural fruit and or vegetable flavors. The objects of this invention are further accomplished by a process for producing a ready-to-eat gluten-free and ketogenic cereal of natural ingredients, said process comprising:
a. preparing the coconut meat as base component by cleaning, chopping and grating it into approximately small bits of about 0.5-1 cm by 0.5-1 cm in size;
b. preparing a base by admixing from about 48 parts to about 50 parts by weight of the chopped and grated coconut meat with from about 2 parts to about 3 parts by weight sago starch as natural binding component, and from 0 part to about 1 part by weight natural flavorings;
c. adding into the mixture of base components sufficient coconut water from about 48 parts to about 50 parts by weight of the total mixture, to render the mixture a cereal batter, which is liquid;
d. blending the whole mixture thoroughly for about 5 minutes or so;
e. blanching the coconut meat mixture to a temperature of about 80°C to about 100°C for about 2 to 5 minutes;
f. cooling the said mixture and spreading it evenly and thinly into trays;
g. drying the mixture to an enrobed base to reach below 5 percent by weight moisture to produce a product that is light brown in color and crunchy;
h. cooling the said dried coconut cereals; and
i. packing the dried coconut in tightly sealed containers.

In a preferred embodiment, the objects of this invention are accomplished by a drying process for producing a ready-to-eat cereal product of natural ingredients, said drying process comprising the following steps:
a. drying the mixture in trays employing solar energy for the first 3 to 4 hours at a temperature of about 45-50 °C;
b. further drying using the mechanical oven dryer for another 2 to 3 hours at a temperature of about 55-65°C; and
c. final drying in a baking oven for about 5-10 minutes at a temperature of about 70-80°C.

Of particular importance in this invention is the embodiment of the process wherein the admixture is spread onto thin trays, then the enrobed base is formed into a sheet prior to drying and then subdivided after drying to render the final product crunchy and light brown in color.

The new ready-to-eat, gluten-free, and ketogenic cereal product of this invention has therein the following proximate composition:

| *Components* | *Percentage* |
|---|---|
| Protein | 5.80% |
| Fat | 26.70% |
| Fiber | 5.30% |
| Carbohydrate | 55.30% |
| Moisture | 3.70% |
| Ash | 3.20% |
| Calories per 100 grams | 484.8 calories |

This invention provides a new and novel ready-to-eat cereal product that is gluten-free, cholesterol-free and rich in medium chain triglycerides (MCTs), which gives the ketogenic characteristics of the product. It is a highly desirable cereal product to a large segment of the population in that it is completely free from chemical additives and has no salt and no sugar added. It is a product which is made from natural ingredients, but yet which is stable against rancidity and staling for at least ten (10) months. It is a very tasty and crunchy product having good taste and texture characteristics.

## Claims

1. A ready-to-eat, gluten-free and ketogenic cereal of natural ingredients, said cereal comprising of: coconut meat base component and sufficient coconut water,
said base component comprising from 48 parts to 50 parts by weight of the cereal batter, a natural binding component, said binding component comprising of sago starch from 2 parts to 3 parts by weight of the cereal batter, and a natural food flavoring, said food flavoring comprising from 0 part to 1 part by weight of the cereal batter, and
said sufficient coconut water, comprising from 48 parts to 50 parts by weight, to render the cereal batter liquid.

2. A ready-to-eat, gluten-free and ketogenic cereal product as in Claim 1 wherein the natural food flavorings comprises a member selected from the group of fruits and or vegetables and a combination thereof.

3. A ready-to-eat, gluten-free and ketogenic cereal product as in Claim 1 which has a final overall moisture content from 1.0 to 5.0 percent by weight.

4. A process for producing a ready-to-eat, gluten-free and ketogenic cereal of natural ingredients, said process comprising:
a. preparing the coconut meat as base component by cleaning, chopping and grating it into approximately small bits of 0.5-1 cm by 0.5-1 cm in size;
b. preparing a base by admixing from 48 parts to 50 parts by weight of the chopped and grated coconut meat with from 2 parts to 3 parts by weight sago starch as natural binding component, and from 0 part to 1 part by weight natural flavorings;
c. adding into the mixture of base components sufficient coconut water from 48 parts to 50 parts by weight of the total mixture, to render the mixture a cereal batter, which is liquid.
d. blending the whole mixture thoroughly for 5 minutes or so;
e. blanching the coconut meat mixture to a temperature of 80°C to 100°C for 2 to 5 minutes;
f. cooling the said mixture and spreading it evenly and thinly into trays;
g. drying the mixture to an enrobed base to reach below 5 percent by weight moisture to produce a product that is light brown in color and crunchy;
h. cooling the said dried coconut cereals; and
i. packing the dried coconut cereals in tightly sealed containers.

5. A process for producing a ready-to-eat, gluten-free and ketogenic cereal of natural ingredients, as in Claim 4 wherein the said drying process comprising the following steps:
a. drying the admixture in trays employing solar energy for the first 3 to 4 hours at a temperature of 45-50°C;
b. further drying using the mechanical oven dryer for another 2 to 3 hours at a temperature of 55-65°C; and
c. final drying in a baking oven for 5-10 minutes at a temperature of 70-80°C.

6. A process as in Claim 4 wherein the natural flavorings are dehydrated fruits and or vegetables and a combination thereof.

7. A ready-to-eat, gluten-free and ketogenic cereal obtainable by the process according to any one of claims 4 to 6.

## Patentansprüche

1. Essfertige, glutenfreie und ketogene Zerealie aus natürlichen Inhaltsstoffen, wobei die Zerealie aus Folgendem besteht: einer Kokosfleisch-Basiskomponente und ausreichend Kokosnusswasser,
wobei die Basiskomponente 48 bis 50 Gewichtsanteile der Zerealienmasse umfasst, einer natürlichen Bindungskomponente, wobei die Bindungskomponente aus Sagostärke 2 bis 3 Gewichtsanteile der Zerealienmasse umfasst, und einem natürlichen Nahrungsmittelaromastoff, wobei der Nahrungsmittelaromastoff 0 bis 1 Gewichtsanteil der Zerealienmasse umfasst, und wobei das ausreichende Kokosnusswasser 48 bis 50 Gewichtsanteile umfasst, um die Zerealienmasse flüssig zu machen.

2. Essfertiges, glutenfreies und ketogenes Zerealienprodukt nach Anspruch 1, wobei die natürlichen Nahrungsmittelaromastoffe ein Mitglied ausgewählt aus der Gruppe bestehend aus Früchten und/oder Gemüse und einer Kombination davon umfassen.

3. Essfertiges, glutenfreies und ketogenes Zerealienprodukt nach Anspruch 1, das einen finalen Gesamtfeuchtigkeitsgehalt von 1,0 bis 5,0 Gewichtsprozent aufweist.

4. Verfahren zur Produktion einer essfertigen, glutenfreien und ketogenen Zerealie aus natürlichen Inhaltsstoffen, wobei das Verfahren Folgendes umfasst:
a. Herstellen des Kokosnussfleischs als Basiskomponente durch ein Reinigen, Zerkleinern und Raspeln davon in kleine Stücke von ungefähr 0,5-1 x 0,5-1 cm Größe;
b. Herstellen einer Basis durch ein Zusammenmischen von 48 bis 50 Gewichtsanteilen des zerkleinerten und geraspelten Kokosnussfleischs mit 2 bis 3 Gewichtsanteilen Sagostärke als eine natürliche Bindungskomponente und 0 bis 1 Gewichtsanteil natürlichen Aromastoffen;
c. Hinzufügen von ausreichend Kokosnusswasser von 48 bis 50 Gewichtsanteilen der Gesamtmischung zu der Mischung aus Basiskomponenten, um aus der Mischung eine Zerealienmasse zu machen, die flüssig ist.
d. gründliches Mischen der gesamten Mischung für etwa 5 Minuten;
e. Blanchieren der Kokosnussfleischmischung auf eine Temperatur von 80 °C bis 100 °C für 2 bis 5 Minuten;
f. Abkühlen der Mischung und gleichmäßiges und dünnschichtiges Verteilen davon in Schalen;
g. Trocknen der Mischung zu einer umhüllten Basis, um unter 5 Gewichtsprozent an Feuchtigkeit zu erreichen, um ein Produkt zu produzieren, das leicht braun gefärbt und knusprig ist;
h. Kühlen der getrockneten Kokosnusszerealien; und
i. Verpacken der getrockneten Kokosnusszerealien in vollständig abgedichtete Behälter.

5. Verfahren zum Produzieren einer essfertigen, glutenfreien und ketogenen Zerealie aus natürlichen Inhaltsstoffen nach Anspruch 4, wobei das Trocknungsverfahren die folgenden Schritte umfasst:
a. Trocknen des Gemisches in Schalen unter Einsatz von Sonnenenergie für die ersten 3 bis 4 Stunden bei einer Temperatur von 45-50 °C;
b. weiteres Trocknen unter Verwendung eines mechanischen Ofentrockners für weitere 2 bis 3 Stunden bei einer Temperatur von 55-65 °C; und
c. finales Trocknen in einem Backofen für 5-10 Minuten bei einer Temperatur von 70-80 °C.

6. Verfahren nach Anspruch 4, wobei die natürlichen Aromastoffe getrocknete Fürchte und/oder getrocknetes Gemüse und eine Kombination davon sind.

7. Essfertige, glutenfreie und ketogene Zerealie, die durch das Verfahren nach einem der Ansprüche 4 bis 6 erhalten werden kann.

## Revendications

1. Céréale cétogène, sans gluten et prête à consommer d'ingrédients naturels, ladite céréale comprenant : un composant de base de chair de noix de coco et de l'eau de noix de coco en quantité suffisante, ledit composant de base constituant de 48 à 50 parties en poids de la pâte de céréale, un composant liant naturel, ledit composant liant constituant de l'amidon de sagou à hauteur de 2 parties à 3 parties en poids de la pâte de céréale, et un arôme alimentaire naturel comprenant de 0 à 1 partie en poids de la pâte de céréale, et ladite eau de noix de coco en quantité suffisante, constituant de 48 parties à 50 parties en poids, pour rendre la pâte de céréale liquide.

2. Produit de céréale cétogène, sans gluten et prête à consommer selon la revendication 1 dans lequel les arômes alimentaires naturels comprennent un élément sélectionné parmi le groupe comprenant des fruits ou des légumes et une combinaison de ceux-ci.

3. Produit de céréale cétogène, sans gluten et prête à consommer selon la revendication 1 qui a une teneur en humidité globale finale de 1,0 à 5,0 pour cent en poids.

4. Procédé de production d'une céréale cétogène, sans gluten et prête à consommer d'ingrédients naturels, ledit procédé comprenant :
a. la préparation de la chair de noix de coco comme composant de base en la nettoyant, la découpant et la râpant en petits morceaux ayant une taille d'approximativement 0,5 à 1 cm sur 0,5 à 1 cm ;
b. la préparation d'une base en associant dans un mélange de 48 parties à 50 parties en poids de la chair de noix de coco découpée et râpée avec 2 parties à 3 parties en poids d'amidon de sagou comme composant liant naturel, et de 0 partie à 1 partie en poids d'arôme naturel ;
c. l'ajout au mélange de composants de base, d'eau de noix de coco en quantité suffisante à hauteur de 48 parties à 50 parties en poids du mélange total, pour faire du mélange une pâte de céréale, qui est liquide.
d. le mélange homogène de l'ensemble du mélange soigneusement pendant 5 minutes environ ;
e. le blanchiment du mélange de chair de noix de coco à une température de 80 °C à 100 °C pendant 2 à 5 minutes ;
f. le refroidissement dudit mélange et l'étalement de manière uniforme et fine de celui-ci dans des plaques ;
g. le séchage du mélange jusqu'à une base enrobée pour atteindre une humidité inférieure à 5 pour cent en poids pour produire un produit qui est de couleur brun clair et croquant ;
h. le refroidissement desdites céréales de noix de coco séchées ; et
i. le conditionnement des céréales de noix de coco séchées dans des récipients fermés hermétiquement.

5. Procédé de production d'une céréale cétogène, sans gluten et prête à consommer d'ingrédients naturels, selon la revendication 4 dans lequel ledit procédé de séchage comprend les étapes suivantes :
a. le séchage du mélange additionnel dans des plaques employant de l'énergie solaire pendant les 3 à 4 premières heures à une température de 45 à 50 °C ;
b. le séchage supplémentaire en utilisant l'étuve mécanique pendant 2 à 3 heures supplémentaires à une température de 55 à 65 °C ; et
c. le séchage final dans un four de cuisson pendant 5 à 10 minutes à une température de 70 à 80 °C.

6. Procédé selon la revendication 4 dans lequel les arômes naturels sont des fruits et ou des légumes déshydratés et une combinaison de ceux-ci.

7. Céréale cétogène, sans gluten et prête à consommer pouvant être obtenue par le procédé selon l'une quelconque des revendications 4 à 6.
